# EUROPÄISCHE PATENTSCHRIFT

(11) **EP 1 935 729 B1**
(45) Veröffentlichungstag und Bekanntmachung des Hinweises auf die Patenterteilung: **13.06.2012**
(21) Anmeldenummer: 07119628.1
(22) Anmeldetag: 30.10.2007
(51) Int. Cl.: B60S 1/24, F16C 11/06, F16J 15/02

(54) **Scheibenwischvorrichtung in einem Fahrzeug**
Windscreen wiper device in a vehicle
Dispositif d'essuie-glace dans un véhicule

(30) Priorität: 21.12.2006 DE 102006060631
(43) Veröffentlichungstag der Anmeldung: 25.06.2008
(73) Patentinhaber: ROBERT BOSCH GMBH, 70442 Stuttgart (DE)
(72) Erfinder: Benner, Andreas, 77830 Buehlertal (DE); Kalchschmidt, Peter, 76646 Bruchsal Untergromb. (DE)

(56) Entgegenhaltungen:
- EP-A1- 0 612 927
- DE-A1- 4 108 219
- DE-A1- 10 244 101
- DE-A1- 19 647 023
- DE-C1- 19 747 931
- US-A- 5 489 161

## Beschreibung

Die Erfindung bezieht sich auf eine Scheibenwischvorrichtung in einem Fahrzeug nach dem Oberbegriff des Anspruches 1.

### Stand der Technik

In der DE 10 2004 005 067 A1 wird eine Scheibenwischvorrichtung in einem Kraftfahrzeug beschrieben, die einen elektrischen Antriebsmotor aufweist, dessen Anker über ein Getriebe mit einer Abtriebswelle gekoppelt ist, wobei die Abtriebswelle in der Regel über ein Wischergestänge mit einer Wischerwelle verbunden ist, die einen Wischerarm der Scheibenwischvorrichtung betätigt. Die Übertragung der Antriebsbewegung erfolgt somit vom Anker des elektrischen Antriebsmotors über das Getriebe auf die Abtriebswelle und weiter über das Wischergestänge auf die Wischerwelle. Da üblicherweise die Achsen von Antriebsmotor und Wischerwelle schiefwinklig zueinander angeordnet sind, muss zumindest ein Gelenkteil des Wischergestänges abgekröpft ausgebildet sein oder es muss zumindest ein Kugelgelenk zur Bewegungsübertragung vorhanden sein.

Da die Scheibenwischvorrichtung der Witterung ausgesetzt ist, muss zugleich Sorge getragen werden, dass kein Wasser in das Kugelgelenk eindringt und das dort vorhandene Schmiermittel im Lauf der Zeit herausspült. Hierbei ist zu berücksichtigen, dass die Scheibenwischvorrichtung für eine lange Betriebsdauer ausgelegt sein muss und begünstigt durch die Relativbewegung zwischen den Bauteilen des Kugelgelenks Undichtigkeiten entstehen können, über die Wasser eindringen kann. Zwar können auf die Gelenke Dichtkappen montiert werden, die üblicherweise aus flexiblem Kunststoff bestehen, um die Relativbewegungen zwischen den Teilen zueinander ausgleichen zu können. Dennoch besteht über eine lange Betriebsdauer gesehen die Gefahr, dass Wasser in das Kugelgelenk eindringt.

Die EP 0 612 927 A1 zeigt eine Scheibenwischvorrichtung in einem Fahrzeug, die über einen elektrischen Antriebsmotor angetrieben wird, dessen Antriebsbewegung über ein Übertragungsgestänge eine Wischerwelle antreibt. Teil des Übertragungsgestänges ist ein Kugelgelenk, das aus einem Kugelzapfen und einer Kugelschale besteht. An der Kugelschale ist ein Dichtungselement angeordnet, das auf Kontakt zur Mantelfläche des Kugelzapfens liegt.

### Offenbarung der Erfindung

Der Erfindung liegt die Aufgabe zugrunde, mit einfachen konstruktiven Maßnahmen eine Scheibenwischvorrichtung in einem Fahrzeug funktionssicher auszubilden. Es soll insbesondere gewährleistet sein, dass auch über eine lange Betriebsdauer kein Wasser in Gelenke der Scheibenwischvorrichtung eindringt und zur Funktionsuntüchtigkeit führt.

Diese Aufgabe wird erfindungsgemäß mit den Merkmalen des Anspruches 1 gelöst. Die Unteransprüche geben zweckmäßige Weiterbildungen an.

Die erfindungsgemäße Scheibenwischvorrichtung, die in einem Fahrzeug beispielsweise als Front- oder Heckscheibenwischvorrichtung eingesetzt wird, weist einen elektrischen Antriebsmotor auf, beispielsweise einen permanenterregten Gleichstrommotor, der über ein Übertragungsgestänge eine Wischerwelle antreibt, an die ein Wischerarm gekoppelt ist. Ein Gestängeteil ist über ein Kugelgelenk, welches aus einem Kugelzapfen und einer Kugelschale besteht, mit der Wischerwelle verbunden, wodurch eine Bewegungsübertragung auch bei schiefwinkligen Anordnungen der bewegten Wellen möglich ist. Des Weiteren ist vorgesehen, dass an der Kugelschale ein Dichtring angeordnet ist, der an der Mantelfläche des Kugelzapfens dichtend anliegt.

Dieser Dichtring zwischen Kugelschale und Kugelzapfen verhindert ein Eindringen von Wasser in den Bereich zwischen Mantelfläche und Stirnseite des Kugelzapfens und Innenseite der Kugelschale, also in den Kräfte übertragenden Abschnitt des Kugelgelenks, in welchem die zueinander relativbeweglichen Gelenkteile unmittelbar aneinander liegen. Der Dichtring kann mit der Kugelschale ein vormontiertes Bauteil bilden, wodurch die Montage der Scheibenwischvorrichtung vereinfacht wird. Außerdem kann auf eine Dichtkappe verzichtet werden, die üblicherweise bei Ausführungen im Stand der Technik eingesetzt wird; die Schützfunktion der Dichtkappe wird nunmehr von dem Dichtring übernommen, und zwar mit höherer Funktionssicherheit, da ein unmittelbarer Kontakt zwischen dem Dichtring und der Mantelfläche des Kugelzapfens gegeben ist, ohne die Relativbeweglichkeit hierdurch einzuschränken. Auch wird das Problem vermieden, dass die Dichtkappe nach erfolgter Montage von der Kugelschale herunterrutscht. Da der Dichtring unmittelbar an der Kugelschale befestigt ist, kann er sämtliche Bewegungen der Kugelschale ausüben und befindet sich in jeder Relativposition der Kugelschale gegenüber dem Kugelzapfen in einer Dichtposition, in der ein unerwünschtes Eindringen von Feuchtigkeit in den Gelenkbereich vermieden wird, in welchem sich auch das Schmiermittel befindet, so dass dieses nicht ausgewaschen werden kann.

Erfindungsgemäß ist in die Kugelschale eine Dichtungsaufnahmenut eingebracht, die zur Aufnahme des Dichtrings vorgesehen ist. Diese Dichtungsaufnahmenut befindet sich vorteilhafterweise in unmittelbarer Nähe zur Stirnseite der topf- oder halbkugelförmigen Kugelschale und bewirkt in Achsrichtung des Kugelzapfens gesehen eine formschlüssige Aufnahme des Dichtrings. Der Dichtring kann entweder mechanisch in die Dichtungsaufnahmenut eingebracht werden, beispielsweise durch Einknöpfen, oder, gemäß weiterer bevorzugter Ausführung, im Spritzgieß- bzw. Zweikomponenten-Fertigungsverfahren in die Nut eingespritzt werden.

Alternativ zu einer Dichtungsaufnahmenut ist auch eine Befestigung an Dichtungshalteeinrichtungen mit anderer Querschnittsgeometrie möglich, die an der Kugelschale angebracht sind. So kann es beispielsweise zweckmäßig sein, Vorsprünge oder dergleichen an der Kugelschale vorzusehen, die sich insbesondere auf der Außenseite der Kugelschale radial nach außen erstrecken und ein Festklemmen oder dergleichen oder auch ein Anspritzen des Dichtrings ermöglichen.

Diese Dichtring-Befestigungsmittel, insbesondere die Dichtungsaufnahmenut befinden sich vorzugsweise auf der radialen Außenseite oder der Innenseite der Kugelschale, zweckmäßigerweise aber in unmittelbarer Nachbarschaft zur Stirnseite. Die Anordnung auf der radialen Innenseite hat den Vorteil, dass der Abstand in Radialrichtung gesehen zwischen der Aufnahmenut bzw. dem Befestigungsmittel zur Mantelfläche des Kugelzapfens nur gering ist, so dass auch ein entsprechend schmal ausgebildeter Dichtring grundsätzlich ausreichend ist, um die gewünschte Dichtfunktion zu erreichen. Andererseits bietet die Anordnung des Befestigungsmittels auf der radialen Außenseite der Kugelschale den Vorteil, dass der verhältnismäßig breit ausgebildete Dichtring einen Bewegungsausgleich während der Drehrelativbewegung zwischen Kugelschale und Kugelzapfen ermöglicht, indem ein Abschnitt des Dichtringes - im Querschnitt des Dichtringes gesehen - als Ausgleichsabschnitt fungiert, der die Relativbewegung ausgleicht. Ein derartiger Ausgleichsabschnitt weist vorzugsweise eine geringere Biegesteifigkeit auf als der unmittelbar an der Mantelfläche des Kugelzapfens anliegende Teil des Dichtringes, so dass der Ausgleichsabschnitt eine entsprechend größere Beweglichkeit besitzt als der an der Mantelfläche anliegende Teil, der für die Dichtfunktion verantwortlich ist. Diese größere Beweglichkeit des Ausgleichsabschnitts wird insbesondere durch eine Querschnittsverjüngung erreicht; gegebenenfalls kommt aber auch der Einsatz eines unterschiedlichen Materials für den Ausgleichsabschnitt in Betracht, der aber mit dem aus Dichtmaterial bestehenden Teil, welcher unmittelbar an der Mantelfläche des Kugelzapfens anliegt, zu einem gemeinsamen Bauteil verbunden wird.

Erfindungsgemäß weist die Dichtungsaufnahmenut über den Umfang einen veränderlichen Verlauf auf, und zwar in Achsrichtung des Kugelzapfens gesehen und/oder in Radialrichtung. Dies wird beispielsweise durch einen wellenförmigen Verlauf der Dichtungsaufnahmenut erreicht, wobei die Wellenform entsprechend in Achsrichtung und/oder in Radialrichtung verlaufen kann. Dieser variable Verlauf der Dichtungsaufnahmenut bewirkt über die Länge des Dichtringes gesehen auch eine wechselnde Dichtkraft, so dass bei einer Bewegung des Kugelkopfes der Dichtring nicht auf seiner gesamten Länge mit einer erhöhten Presskraft beaufschlagt wird, sondern nur abschnittsweise.

Der Dichtring weist beispielsweise einen O-förmigen Querschnitt auf oder ist als Dichtband ausgebildet. Möglich sind aber auch hiervon abweichende, ungleichförmige Querschnitte, beispielsweise in Keulenform oder in Knochenform.

Weitere Vorteile und zweckmäßige Ausführungen sind den weiteren Ansprüchen, der Figurenbeschreibung und den Zeichnungen zu entnehmen. Es zeigen:
- Fig. 1: eine Scheibenwischvorrichtung, die in einem Fahrzeug eingesetzt wird, mit einem elektrischen Antriebsmotor, dessen Anker über eine Getriebeeinrichtung mit einer Abtriebswelle verbunden ist, deren Bewegung mithilfe eines Übertragungsgestänges auf eine Wischerwelle übertragen wird, die einen Wischerarm antreibt,
- Fig. 2: ein Kugelgelenk zwischen zwei Bauteilen im Übertragungsgestänge mit einer die Kugelschale des Kugelgelenks übergreifenden Dichtkappe zum Schutz vor eindringendem Wasser (Stand der Technik),
- Fig. 3: ein Kugelgelenk, welches in der Scheibenwischvorrichtung eingesetzt wird, mit einem Dichtring zwischen Kugelschale und Kugelzapfen, wobei der Dichtring in eine radial außen liegende Dichtungsaufnahmenut an der Kugelschale eingesetzt ist,
- Fig. 4: eine weitere Ausführung eines Kugelgelenks mit Kugelschale und Kugelzapfen, wobei auf der radial innen liegenden Seite der Kugelschale eine Dichtungsaufnahmenut für den Dichtring vorgesehen ist.

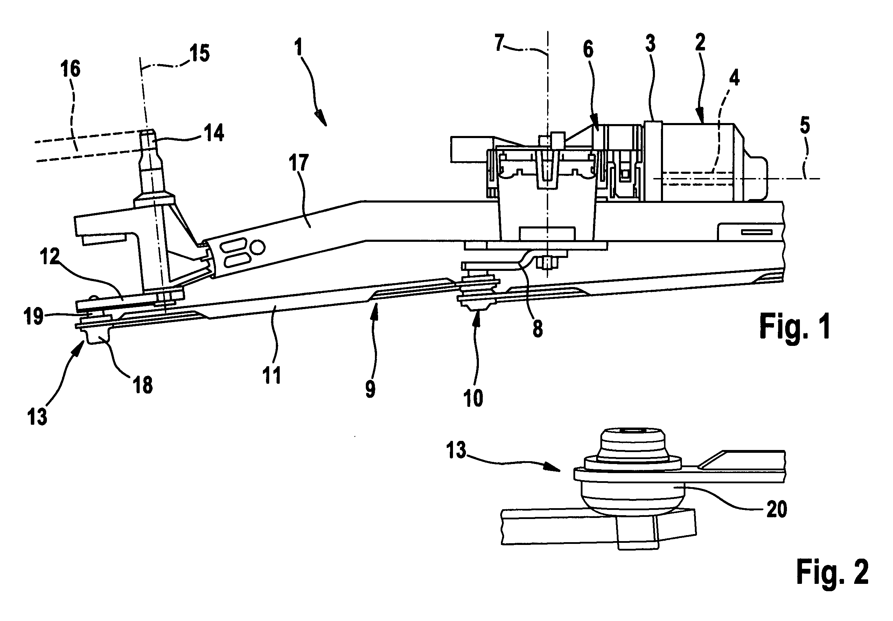

Die in Fig. 1 dargestellte Scheibenwischvorrichtung 1 findet vorteilhaft Verwendung in einem Fahrzeug als Frontscheibenwischvorrichtung, wobei im Rahmen der Erfindung grundsätzlich auch ein Einsatz als Heckscheibenwischvorrichtung in Betracht kommt. Die Scheibenwischvorrichtung 1 umfasst einen elektrischen Antriebsmotor 2, insbesondere einen permanenterregten Gleichstrommotor, der in einem Motorgehäuse 3 einen andeutungsweise dargestellten, rotierend gelagerten Anker 4 aufweist, dessen Motorachse mit 5 bezeichnet ist. Die Antriebsbewegung des Ankers 4 wird über ein Getriebe 6, das sich bevorzugt das Gehäuse mit dem Antriebsmotor teilt, auf eine Abtriebswelle übertragen, deren Rotationsachse mit 7 gekennzeichnet ist. Die Abtriebswelle ist über einen Lenker 8 drehbeweglich mit einem Übertragungsgestänge 9 gekoppelt, und zwar mittels eines Gelenkes 10. Bei einer Rotationsbewegung der Abtriebswelle um die Rotationsachse 7 wird auch in entsprechender Weise der Lenker 8 verdreht; diese Drehbewegung wird über das Gelenk 10 auf das Übertragungsgestänge 9 übertragen.

Bestandteil des Übertragungsgestänges 9 ist eine Kurbel 11, die von dem Gelenk 10 verzweigt und auf der dem Gelenk 10 gegenüberliegenden Stirnseite über ein Kugelgelenk 13 mit einer Schwinge 12 drehgekoppelt ist. Diese Schwinge 12 ist auf ihrer dem Gelenk 13 abgewandten Seite drehbeweglich mit einer Wischerwelle 14 verbunden, deren Wischerachse mit 15 bezeichnet ist. Die Wischerwelle 14 ist Träger eines Wischerarmes 16. Somit wird die Antriebsbewegung des elektrischen Antriebsmotors 2 über die Abtriebswelle, den Lenker 8, die Kurbel 11, die Schwinge 12 und die Wischerwelle 14 auf den Wischerarm 16 übertragen.

Die gesamte Scheibenwischvorrichtung 1 ist von einem Rahmen 17 getragen, der fest mit einem karosserieseitigen Bauteil verbunden wird.

Die Rotationsachse 7 der Abtriebswelle und die Wischerachse 15 stehen schiefwinklig zueinander. Diese nicht-parallele Anordnung der Achsen wird über das Kugelgelenk 13 kompensiert, welches zwischen den Bauteilen 11 und 12 im Übertragungsgestänge 9 angeordnet ist. Das Kugelgelenk 13 umfasst eine Kugelschale 18, die im Ausführungsbeispiel mit der Kurbel 11 verbunden ist, sowie einen Kurbelzapfen 19, der mit der Schwinge 12 verbunden ist. Gegebenenfalls ist auch das Gelenk 10 als Kugelgelenk ausgeführt, über das die Drehbewegung des Lenkers 8 auf das Übertragungsgestänge 9 übertragen wird.

In Fig. 2 ist ein Kugelgelenk 13 gemäß dem Stand der Technik dargestellt. Kennzeichnend hierfür ist eine Dichtkappe 20, die auf die Kugelschale des Kugelgelenks 13 aufgesetzt wird, um Kugelgelenk und Kugelzapfen gegeneinander abzudichten und ein Eindringen von Wasser in den unmittelbar aufeinander liegenden Bereich zwischen Kugelzapfen und Kugelschale zu verhindern. Diese Dichtkappe 20 stellt ein zusätzliches Bauteil dar, das auf das Kugelgelenk aufgesetzt werden muss. Da die Dichtkappe 20 einen Bewegungsspielraum besitzt, besteht die Gefahr, dass nach längerer Betriebsdauer die Dichtigkeit nicht mehr sicher gewährleistet ist und Wasser in das Kugelgelenk eindringt.

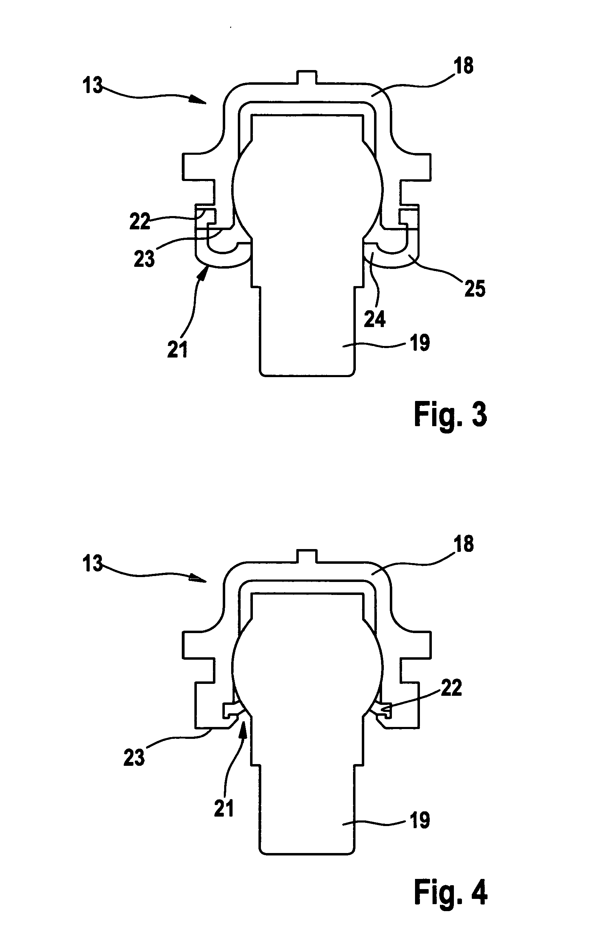

In den Figuren 3 und 4 ist eine erfindungsgemäße Ausführung eines Kugelgelenks 13 dargestellt. Wie Fig. 3 zu entnehmen, ist zwischen Kugelschale 18 und Kugelzapfen 19 des Kugelgelenks 13 ein Dichtring 21 angeordnet, der an der Kugelschale 18 gehalten ist. Hierfür ist auf der radial außen liegenden Mantelfläche der Kugelschale 18 in unmittelbarer Nachbarschaft zur Stirnseite 23 eine umlaufende Dichtungsaufnahmenut 22 in die Wandung der Kugelschale 18 eingebracht, die zur Aufnahme des Dichtrings 21 dient. Der Dichtring 21 kann entweder mechanisch in die Dichtungsaufnahmenut 22 eingebracht werden, beispielsweise durch Einsetzen oder Einklipsen, oder, gemäß einer alternativen Ausführung, in die Dichtungsaufnahmenut 22 eingespritzt werden, beispielsweise im Zweikomponenten-Fertigungsverfahren.

Der Dichtring 21 besitzt, im Querschnitt gesehen, einen Dichtabschnitt 24, der in zusammengebauter Position unmittelbar an der Mantelfläche des Kugelzapfens 19 dichtend anliegt, sowie einen Ausgleichsabschnitt 25, der einteilig mit dem Dichtabschnitt ausgebildet ist und über den der Dichtring in der Dichtungsaufnahmenut 22 aufgenommen ist. Dieser Ausgleichsabschnitt 25 stellt eine verhältnismäßig gute Beweglichkeit des Dichtringes sicher, so dass Relativbewegungen zwischen Kugelschale 18 und Kugelzapfen 19 von diesem Ausgleichsabschnitt 25 kompensiert werden können. Der Ausgleichsabschnitt 25 ist insbesondere einstückig mit dem Dichtabschnitt 24 ausgebildet und besteht aus dem gleichen Dichtmaterial. Zur Verbesserung der Beweglichkeit kann es vorteilhaft sein, den Ausgleichsabschnitt mit einer verjüngten Wandstärke auszubilden. Es ist aber auch möglich, den Ausgleichsabschnitt aus einem weicheren Material als den Dichtabschnitt zu fertigen, um bereits über die Materialauswahl eine gute Beweglichkeit des Ausgleichsabschnittes sicherzustellen.

Im Ausführungsbeispiel nach Fig. 4 weist die Kugelschale 18 auf ihrer radial innen liegenden Seite eine Dichtungsaufnahmenut 22 in unmittelbarer Nachbarschaft zur offenen Stirnseite 23 auf. In diese Dichtungsaufnahmenut 22 ist der Dichtring 21 eingesetzt, der jedoch im Unterschied zum vorhergehenden Ausführungsbeispiel im Querschnitt wesentlich kleiner ausgebildet ist, da von dem Dichtring nur eine sehr kurze Distanz zwischen der Dichtungsaufnahmenut 22 auf der Innenseite und der Mantelfläche des Kugelzapfens 19 überbrückt werden muss. Der auf der Innenseite der Kugelschale integrierte Dichtring 21 bietet den Vorteil, dass die Bauhöhe in Achsrichtung stark reduziert ist.

## Patentansprüche

1. Scheibenwischvorrichtung in einem Fahrzeug, mit einem elektrischen Antriebsmotor (2), der über ein Übertragungsgestänge (9) eine Wischerwelle (14) mit einem Wischerarm (16) antreibt, wobei ein Gestängeteil (11) des Übertragungsgestänges (9) über ein Kugelgelenk (13), bestehend aus einem Kugelzapfen (19) und einer Kugelschale (18), mit der Wischerwelle (14) verbunden ist, wobei an der Kugelschale (18) ein Dichtring (21) angeordnet ist, der an der Mantelfläche des Kugelzapfens (19) dichtend anliegt,
**dadurch gekennzeichnet, dass** der Dichtring (21) in eine Dichtungsaufnahmenut (22) an der Kugelschale (18) eingebracht ist und dass die Dichtungsaufnahmenut (22) über den Umfang einen veränderlichen Verlauf in Achs- und/oder Radialrichtung aufweist.

2. Scheibenwischvorrichtung nach Anspruch 1,
**dadurch gekennzeichnet, dass** die Dichtungsaufnahmenut (22) in die radiale Außenseite der Kugelschale (18) eingebracht ist.

3. Scheibenwischvorrichtung nach Anspruch 1 oder 2,
**dadurch gekennzeichnet, dass** die Dichtungsaufnahmenut (22) in die radiale Innenseite der Kugelschale (18) eingebracht ist.

4. Scheibenwischvorrichtung nach Anspruch 2 oder 3,
**dadurch gekennzeichnet, dass** die Dichtungsaufnahmenut (22) unmittelbar benachbart zur Stirnseite (23) der Kugelschale (18) angeordnet ist.

5. Scheibenwischvorrichtung nach einem der Ansprüche 1 bis 4,
**dadurch gekennzeichnet, dass** der Dichtring (21) an die Kugelschale (18) angespritzt ist.

6. Scheibenwischvorrichtung nach einem der Ansprüche 1 bis 5,
**dadurch gekennzeichnet, dass** der Dichtring (21) einen ringförmigen Ausgleichsabschnitt (25) aufweist, der unmittelbar mit der Kugelschale (18) verbunden ist.

7. Scheibenwischvorrichtung nach Anspruch 6,
**dadurch gekennzeichnet, dass** der Ausgleichsabschnitt (25) eine geringere Biegesteifigkeit aufweist als der unmittelbar an der Mantelfläche des Kugelzapfens (19) anliegende Teil des Dichtrings (21).

8. Scheibenwischvorrichtung nach Anspruch 6 oder 7,
**dadurch gekennzeichnet, dass** der Ausgleichsabschnitt (25) einen dünneren Querschnitt aufweist als der Dichtring (21).

9. Scheibenwischvorrichtung nach einem der Ansprüche 1 bis 8,
**dadurch gekennzeichnet, dass** die Dichtungsaufnahmenut (22) wellenförmig verläuft.

10. Scheibenwischvorrichtung nach einem der Ansprüche 1 bis 9,
**dadurch gekennzeichnet, dass** der Dichtring (21) einen nichtrunden Querschnitt aufweist, beispielsweise Keulenform.

11. Scheibenwischvorrichtung nach einem der Ansprüche 1 bis 10,
**dadurch gekennzeichnet, dass** die Motorachse (5) des Antriebsmotors (2) und die Wischerachse (15) der Wischerwelle (14) zueinander in einem Winkel stehen.

## Claims

1. Windscreen wiper device in a vehicle, with an electric driving motor (2) which, via a transmission linkage (9) drives a wiper shaft (14) with a wiper arm (16), wherein a linkage part (11) of the transmission linkage (9) is connected to the wiper shaft (14) via a ball-and-socket joint (13) consisting of a ball pivot (19) and a ball socket (18), wherein a sealing ring (21) is arranged on the ball socket (18) and bears in a sealing manner against the lateral surface of the ball pivot (19), **characterized in that** the sealing ring (21) is placed into a seal-receiving groove (22) on the ball socket (18), and **in that** the seal-receiving groove (22) has a variable profile over the circumference in the axial and/or radial direction.

2. Windscreen wiper device according to Claim 1, **characterized in that** the seal-receiving groove (22) is placed into the radial outer side of the ball socket (18).

3. Windscreen wiper device according to Claim 1 or 2, **characterized in that** the seal-receiving groove (22) is placed into the radial inner side of the ball socket (18).

4. Windscreen wiper device according to Claim 2 or 3, **characterized in that** the seal-receiving groove (22) is arranged directly adjacent to the end side (23) of the ball socket (18).

5. Windscreen wiper device according to one of Claims 1 to 4, **characterized in that** the sealing ring (21) is moulded onto the ball socket (18).

6. Windscreen wiper device according to one of Claims 1 to 5, **characterized in that** the sealing ring (21) has an annular compensating section (25) which is directly connected to the ball socket (18).

7. Windscreen wiper device according to Claim 6, **characterized in that** the compensating section (25) has a lower flexural rigidity than that part of the sealing ring (21) which bears directly against the lateral surface of the ball pivot (19).

8. Windscreen wiper device according to Claim 6 or 7, **characterized in that** the compensating section (25) has a thinner cross section than the sealing ring (21).

9. Windscreen wiper device according to one of Claims 1 to 8, **characterized in that** the seal-receiving groove (22) has a wave-shaped profile.

10. Windscreen wiper device according to one of Claims 1 to 9, **characterized in that** the sealing ring (21) has a noncircular cross section, for example a lobe shape.

11. Windscreen wiper device according to one of Claims 1 to 10, **characterized in that** the motor axis (5) of the driving motor (2) and the wiper axis (15) of the wiper shaft (14) are at an angle to each other.

## Revendications

1. Dispositif d'essuie-glace dans un véhicule, comprenant un moteur d'entraînement électrique (2), qui, par le biais d'une tringlerie de transmission (9), entraîne un arbre d'essuie-glace (14) avec un bras d'essuie-glace (16), une partie de tringlerie (11) de la tringlerie de transmission (9) étant connectée par le biais d'un joint à rotule (13), constitué d'un tourillon sphérique (19) et d'un coussinet de rotule (18), à l'arbre d'essuie-glace (14), une bague d'étanchéité (21) étant disposée sur le coussinet de rotule (18) laquelle s'applique de manière hermétique contre la surface d'enveloppe du tourillon sphérique (19),
**caractérisé en ce que** la bague d'étanchéité (21) est introduite dans une rainure de logement d'étanchéité (22) sur le coussinet de rotule (18), et **en ce que** la rainure de logement d'étanchéité (22) présente, sur sa périphérie, une allure variable dans la direction axiale et/ou radiale.

2. Dispositif d'essuie-glace selon la revendication 1,
**caractérisé en ce que** la rainure de logement d'étanchéité (22) est introduite dans le côté radial extérieur du coussinet de rotule (18).

3. Dispositif d'essuie-glace selon la revendication 1 ou 2,
**caractérisé en ce que** la rainure de logement d'étanchéité (22) est introduite dans le côté radial intérieur du coussinet de rotule (18).

4. Dispositif d'essuie-glace selon la revendication 2 ou 3,
**caractérisé en ce que** la rainure de logement d'étanchéité (22) est disposée de manière directement adjacente au côté frontal (23) du coussinet de rotule (18).

5. Dispositif d'essuie-glace selon l'une quelconque des revendications 1 à 4,
**caractérisé en ce que** la bague d'étanchéité (21) est moulée par injection sur le coussinet de rotule (18).

6. Dispositif d'essuie-glace selon l'une quelconque des revendications 1 à 5,
**caractérisé en ce que** la bague d'étanchéité (21) présente une portion d'équilibrage annulaire (25) qui est connectée directement au coussinet de rotule (18).

7. Dispositif d'essuie-glace selon la revendication 6,
**caractérisé en ce que** la portion d'équilibrage (25) présente une rigidité en flexion inférieure à celle de la partie de la bague d'étanchéité (21) s'appliquant directement contre la surface d'enveloppe du tourillon sphérique (19).

8. Dispositif d'essuie-glace selon la revendication 6 ou 7,
**caractérisé en ce que** la portion d'équilibrage (25) présente une section transversale plus mince que la bague d'étanchéité (21).

9. Dispositif d'essuie-glace selon l'une quelconque des revendications 1 à 8,
**caractérisé en ce que** la rainure de logement d'étanchéité (22) s'étend sous forme ondulée.

10. Dispositif d'essuie-glace selon l'une quelconque des revendications 1 à 9,
**caractérisé en ce que** la bague d'étanchéité (21) présente une section transversale non circulaire, par exemple en forme de lobe.

11. Dispositif d'essuie-glace selon l'une quelconque des revendications 1 à 10,
**caractérisé en ce que** l'axe de moteur (5) du moteur d'entraînement (2) et l'axe d'essuie-glace (15) de l'arbre d'essuie-glace (14) sont orientés suivant un angle l'un par rapport à l'autre.
